# EUROPÄISCHE PATENTSCHRIFT

(11) **EP 1 102 804 B1**
(45) Veröffentlichungstag und Bekanntmachung des Hinweises auf die Patenterteilung: **19.03.2003**
(21) Anmeldenummer: 99934717.2
(22) Anmeldetag: 21.07.1999
(51) Int. Cl.: C08J 5/04, C08L 63/08

(54) **VERBUNDWERKSTOFFE AUF DER BASIS NACHWACHSENDER ROHSTOFFE**
COMPOSITE MATERIALS ON THE BASIS OF RENEWABLE RESOURCES
MATERIAUX COMPOSITES A BASE DE MATIERES PREMIERES RENOUVELABLES

(30) Priorität: 30.07.1998 DE 19834048
(43) Veröffentlichungstag der Anmeldung: 30.05.2001
(73) Patentinhaber: Cognis Deutschland GmbH & Co. KG, 40589 Düsseldorf (DE)
(72) Erfinder: PRIEBE, Christian, D-42489 Wülfrath (DE); SKWIERCZ, Michael, D-40764 Langenfeld (DE); BÖGE, Kai, D-40217 Düsseldorf (DE)
(86) Internationale Anmeldenummer: EP9905208
(87) Internationale Veröffentlichungsnummer: WO00006632

(56) Entgegenhaltungen:
- EP-A- 0 634 433
- DE-A- 19 627 165
- WARTH H ET AL: "POLYESTER NETWORKS BASED UPON EPOXIDIZED AND MALEINATED NATURAL OILS" ANGEWANDTE MAKROMOLEKULARE CHEMIE. APPLIED MACROMOLECULAR CHEMIST RY AND PHYSICS, Bd. 249, 1. Juli 1997 (1997-07-01), Seiten 79-92, XP000697932 ISSN: 0003-3146 in der Anmeldung erwähnt

## Beschreibung

Die Erfindung betrifft einen Verbundwerkstoff auf der Basis von Naturfasern und einem Matrixmaterial sowie ein Verfahren zu seiner Herstellung sowie die Verwendung derartiger Verbundmaterialien.

Faserverbundwerkstoffe bestehen wenigstens aus Fasern und einem Matrixmaterial. Dabei dienen die Fasern der Verstärkung des Werkstoffes. Die Fasern nehmen dabei insbesondere am Werkstoff wirkende Zugkräfte auf, die Matrix füllt Hohlräume zwischen den Fasern und umhüllt die Fasern. Damit überträgt die Matrix insbesondere die Schubkräfte, die auf das Verbundmaterial einwirken. Darüber hinaus schützt die Matrix die umhüllten Fasern vor Außeneinflüssen wie z. B. Eindringen von Wasser oder Feuchtigkeit, oxidative oder photooxidative Einflüsse. Bekannt sind Faserverbundwerkstoffe beispielsweise aus glasfaser-, metallfaser- oder kohlenstoffaserverstärkten synthetischen Kunststoffen. Diese Verbundwerkstoffe haben sich in der Vergangenheit wegen ihrer hohen Belastbarkeit, Dauerhaftigkeit und Reproduzierbarkeit in vielen Anwendungsfeldern bewährt. Im Zuge der Forderung nach langfristig tragfähigen Entwicklungen (sustainable development) werden jedoch immer häufiger auch für Verbundmaterialien solche Produkte gefordert, die auf der Basis von Biomasse und/oder landwirtschaftlichen Produkten als nachwachsenden Rohstoffen gefertigt werden. Im Gegensatz zu petrochemischen und fossilen Rohstoffen erschöpfen sich nachwachsende Rohstoffe nicht, sie können über den Anbau geeigneter Pflanzen durch Photosynthese jederzeit regeneriert werden. Naturfaserverstärkte Kunststoffe sind an sich bekannt; ihre Vorteile gegenüber glasfaserverstärkten Kunststoffen sind hinsichtlich Rohstoffbasis, Ökobilanz, Arbeitsschutz, Gewicht oder thermische Entsorgung sind bereits beschrieben, siehe z. B.

Kohler, R.; Wedler, M.; Kessler, R.: "Nutzen wir das Potential der Naturfasern?" In: Gülzower Fachgespräche "Naturfaserverstärkte Kunststoffe" (Hrsg. Fachagentur Nachwachsende Rohstoffe, Gülzow 1995), S. 95-100 oder "Leitfaden Nachwachsende Rohstoffe, Anbau, Verarbeitung, Produkte", 1. Auflage, Heidelberg: Müller, 1998, insbesondere Kapitel 8. Bezüglich der verwendeten Matrizes kann zwischen thermoplastischen und duroplastischen Systemen unterschieden werden. Systeme mit thermoplastischen Matrizes auf der Basis nachwachsender Rohstoffe sind bekannt, so beschreibt die EP-A-687 711 einen Faserverbundwerkstoff aus biologisch abbaubaren Fasern und einer Matrix aus biologisch abbaubarem Material. Als geeignete thermoplastische Materialien für die Matrix werden Celluloseacetat, Lignin, Stärke sowie Stärkederivate vorgeschlagen. Derartige Produkte zeigen sich hinsichtlich Verarbeitbarkeit, mechanische Eigenschaften in wichtigen Anwendungen und Preis als unzulänglich.

Die DE-A-196 47 671 beschreibt einen Faserverbundwerkstoff mit einem Fasermaterial zur Verstärkung und einem Matrixmaterial auf der Basis von Schellack, wobei das Matrixmaterial einen Vernetzer enthalten kann. Hauptnachteil dieses duroplastischen Matrixmaterials ist die sehr begrenzte Verfügbarkeit von Schellack.

Als weitere duroplastische Systeme stehen z. Zt. im wesentlichen Polymersysteme zur Verfügung, deren Rohstoffe zum ganz überwiegenden Teil petrochemischer Provenienz sind (Polyurethane, Epoxidharze, Polyester usw.). Im Bereich der Polyurethane gibt es einige Vorschläge zur Entwicklung von nativ basierenden Rohstoffen, so schlägt die EP-A-634 433 als Bindemittel zur Herstellung von Verbundmaterialien Reaktionsprodukte aus einem Polyester, erhältlich durch Selbstkondensation von Recinolsäure mit einem aromatischen Polyisocyanat vor.

Weiterhin schlägt die DE-A-41 19 295 einen umweltsicheren Verbundwerkstoff aus Naturfasern und Kunststoffen des Typs Polyurethan-Polyester und/oder Polyurethan-Polyamid vor, die hydroxidgruppentragende natürliche Fettsäuren unveränderter Länge oder deren Derivate enthalten.

R. Mülhaupt, D. Hoffmann, S. Lawson und H. Warth, angewandte makromolekulare Chemie 249 (1997), Seite 79 bis 92 beschreiben flexible, semiflexible und starre Polyesternetzwerke auf der Basis von maleinierten Ölen aus Pflanzenölen, wie Sojabohnen-, Raps- und Leinöl als Anhydrid-funktionelle Härter mit Epoxidharzen auf Basis Bisphenol-A-Diglycydylether oder epoxidierter Pflanzenöle. Weiterhin werden ungesättigte Polyesterharze basierend auf Maleinsäureanhydrid, expoxidierten Pflanzenölen und Styrol beschrieben, die gegebenenfalls mit natürlichen Kurzfasern wie Flachs oder Hanf verstärkt werden können. Über deren Verarbeitbarkeit auf bestehenden Verarbeitungsmaschinen werden keine Aussagen gemacht

Aus der DE 196 27 165 A sind Polymerwerkstoffe auf Basis nachwachsender Rohstoffe bekannt, wobei diese Werkstoffe Reaktionsprodukte aus Triglyceriden, die Epoxy- oder Aziridingruppen, mit Polycarbonsäureanhydriden enthalten.

Der vorliegenden Erfindung liegt die **Aufgabe** zugrunde, Verbundwerkstoffe bereitzustellen, bei denen sowohl die Verstärkungsmittel als auch die Matrixmaterialien im wesentlichen auf der Basis nachwachsender Rohstoffe aufgebaut sind. Zusätzlich sollen diese Verbundwerkstoffe auf bestehenden Verarbeitungsmaschinen ohne Probleme verarbeitbar sein.

Die erfindungsgemäße **Lösung** der Aufgabe ist den Patentansprüchen zu entnehmen. Sie beruht im wesentlichen auf der Verwendung von Naturfasern als Verstärkungsmaterial und einem Matrixmaterial, das im wesentlichen aus Bindemittel-systemen auf Basis von ausgewählten oleochemischen Duroplasten besteht. Gegenstand der vorliegenden Erfindung sind also Verbundwerkstoffe auf der Basis von Naturfasern und einem Matrixmaterial, wobei das Matrixmaterial im wesentlichen auf der Basis von oleochemischen Duroplasten aufgebaut ist, und diese
a) aus Ringöffnungsprodukten epoxidierter Fettstoffe mit kurzkettigen olefinisch ungesättigten Carbonsäuren und ggf. weiteren olefinisch ungesättigten Comonomeren aufgebaut sind mit der Maßgabe, daß die ungesättigten Carbonsäuren ausgewählt sind aus der Gruppe Acrylsäure, Methacrylsäure, Crotonsäure, Itakonsäure, Maleinsäure, Fumarsäure oder deren Mischungen oder diese
b) aus anhydridisch modifizierten Fettsäuren aufgebaut sind, wobei diese durch En-Reaktionen oder Diels-Alder-Reaktionen von ungesättigten Anhydriden an isolierten und/oder konjugierten Doppelbindungen der der Ausgangsfettsäuren hergestellt werden.

Ein weiterer Gegenstand der vorliegenden Erfindung ist ein Verfahren zur Herstellung von Bauteilen aus den erfindungsgemäßen Duroplasten und Naturfasern.

Ein weiterer Gegenstand der vorliegenden Erfindung ist die Verwendung der erfindungsgemäßen Verbundwerkstoffe zur Herstellung von Bauteilen für den Fahrzeugbau, d. h. den Automobilbau, Schienenfahrzeugbau, Flugzeugbau, die Herstellung von Karosserieteilen sowie Inneneinrichtungen. Fernerhin können die erfindungsgemäßen Verbundwerkstoffe in der Bauindustrie für Dämmstoffe, Sandwichelemente und dergleichen, im Fensterbau zum Bau von Fensterrahmen, Türrahmen und Türen verwendet werden, in der Möbelindustrie zur Herstellung von Platten, Möbelteilen und Möbeln, in der Elektro-/Energieindustrie zur Herstellung von Computern, Haushaltsgeräten, Gehäusen, Flügeln von Gebläsen oder Windenergieanlagen. Im Bereich der Freizeitgestaltung und im Sport können aus den erfindungsgemäßen Verbundwerkstoffen Sportgeräte, Boote, Segelflugzeuge und Spielwaren hergestellt werden, im Maschinenbau können sie zur Herstellung von Zahnrädern oder Getriebeteilen eingesetzt werden, in der Abfallwirtschaft zur Herstellung von Abfallbehältern. Im Anlagenbau können aus den erfindungsgemäßen Verbundwerkstoffen Behälter, Pumpen, Rohrelemente hergestellt werden, in der Verpackungsindustrie lassen sich die erfindungsgemäßen Werkstoffe zur Herstellung von Flaschen, Hohlkörpern, Formteilen und technischen Verpackungen verwenden. Schließlich lassen sich die erfindungsgemäßen Verbundwerkstoffe in der Landwirtschaft zur Herstellung von Behältern, Futtermittelsilos, Pflanzentöpfen und in der Sicherheitstechnik zur Herstellung von Schutzhelmen einsetzen.

Duroplaste sind bekanntlich Kunststoffe, die durch irreversible und enge Vernetzung über kovalente Bindungen aus Oligomeren gegebenenfalls unter Zusatz von Monomeren oder Polymeren entstehen. Unter "Duroplasten" im Sinne dieser Erfindung werden dabei sowohl die Rohstoffe vor der Vernetzung (d. h. die Reaktionsharze) als auch die ausgehärteten Reaktionsprodukte verstanden.

Oleochemische Derivate bzw. Fettstoffe im Sinne der vorliegenden Erfindung sind dabei natürliche, insbesondere pflanzliche oder tierische Öle, sowie insbesondere deren Derivate bzw. Folgeprodukte durch chemische Umsetzung. Die vorgenannten Öle liegen in der Natur in Form natürlicher Gemische unterschiedlicher Fettsäureglycerinester vor, beispielsweise im Palmöl, Palmkernöl, Palmstearin, Olivenöl, Rüböl, Koreanderöl, Sonnenblumenöl, Baumwollöl, Erdnußöl, Hanföl, Leinöl, Lardöl, Fischöl, Fischtranöl, Schweineschmalz oder Rindertalg. Die Fettsäurekomponente der vorgenannten natürlichen Triglyceride sind neben den gesättigten insbesondere die ein- oder mehrfach ungesättigten Säuren Palmitolein-, Öl-, Elaidin-, Petroselin-, Eruca-, Ricinol-, Hydroxymethoxystearin-, 12-Hydroxystearin-, Linol-, Linolen- und Gadoleinsäure. Nach an sich bekannten Verfahren können in diese Triglyceride weitere zur Vernetzung befähigte funktionelle Gruppen wie Hydroxyl-, Mercapto-, Carboxyl-, Amino-, Säureanhydrid-, oder Epoxid-Gruppen oder auch olefinische Doppelbindungen eingeführt werden.

Beispiele für geeignete Ausgangsmaterialien sind vorzugsweise die natürlichen Fette und Öle von Raps, Sonnenblumen, Soja, Lein, Hanf, Ricinus, Kokusnüssen, Ölpalmen, Ölpalmkernen und Ölbäumen.

Weitere geeignete Ausgangsstoffe sind die durch die Polymerisation oder Olygomerisierung von Fettsäuren durch radikalische Polymerisation oder thermische Behandlung zugänglichen Dimer- und Trimerfettsäuren sowie deren Folgeprodukte.

Zur Herstellung von oleochemischen Duroplasten sind die folgenden Verbindungsklassen ganz besonders geeignet:
- epoxidierte Fette und Öle
- aminische Fettstoffe
- (Meth)acrylat-funktionelle Fettstoffe, vorzugsweise hergestellt durch Veresterung von (Meth)acrylsäure mit hydroxidfunkionalisierten Fetten und Ölen, oder durch Ringöffhungs-Reaktion von epoxydierten Fettstoffen mit olefinisch ungesättigten Carbonsäuren wie (Meth)acrylsäure, Crotonsäure, Itakonsäure, Maleinsäure oder deren Mischung

Die wichtigsten Vertreter der epoxidierten Fette und Öle sind das expoxidierte Sojaöl und das epoxidierte Rapsöl sowie das epoxidierte Sonnenblumenöl.

Diese epoxidierten Triglyceride können durch nukleophile Ringöffnung in die entsprechenden hydroxylgruppenhaltigen Verbindungen umgewandelt werden. Unter Nukleophilen sind Alkohole wie z. B. Wasser Methanol, Ethanol, Ethylenglykol, Glycerin oder Trimethylolpropan, Amine wie z. B. Ethanolamin, Diethanolamin, Triethanolamin, Ethylendiamin, Dipropylentriamin oder Hexamethylendiamin oder Carbonsäuren wie Essigsäure, Dimerfettsäure, Maleinsäure, Phtalsäure, Terephthalsäure oder ein Gemisch von mono- und/oder difunktionellen Fettsäuren mit 6 bis 30 C-Atomen zu verstehen.

Weiterhin können vorzugsweise mit nukleophilen ringgeöffneten anhydridisch modifizierte Fettsäuren und deren Derivate eingesetzt werden. Anhydridisch modifizierte Fettsäuren und deren Derivate können auch z. B. durch En-Addition oder

Diels-Alder-Addition von ungesättigten Anhydriden wie Maleinsäureanhydrid an isolierte und/oder konjugierte Doppelbindungen bereitet werden. Die Addition kann auch radikalisch erfolgen, dabei sind auch Additionen von gesättigten Anhydriden an gesättigte und ungesättigte Fettstoffe möglich.

Werden epoxidierte oder anhydridisch modifizierte Fettstoffe mit aminogruppenhaltigen Nukleophilen so umgesetzt, daß die erhaltenen Derivate primäre oder sekundäre Aminogruppen enthalten, so können diese Produkte auch als "aminmodifizierte Fettstoffe" bezeichnet werden. Solche Verbindungen lassen sich ebenfalls zu oleochemischen Duroplasten verarbeiten.

Über eine Veresterungsreaktion von Carbonsäureanhydriden mit Hydroxy-fünktionellen Fettstoffen lassen sich carbonsäuregruppenhaltige bzw. carbonsäureanhydridgruppenhaltige Fettstoffe herstellen, die zur Aushärtung mit Epoxiden geeignet sind. Beispiele für einzusetzende Carbonsäureanhydride sind Maleinsäureanhydrid, Bernsteinsäureanhydrid, Itaconsäureanhydrid, Phthalsäureanhydrid, 4-Cyclohexan-1,2-dicarbonsäureanhydrid, Naphtalin-1,8-dicarbonsäureanhydrid, Nadinsäureanhydrid oder deren Mischungen. Die hydroxylgruppenhaltigen Fettstoffe können hierbei hydroxylhaltige oder hydroxylierte Triglyceride, Diglyceride, Dimerdiole oder deren Mischungen sein, die gegebenenfalls auch hydriert wurden.

Die Veresterungsprodukte von hydroxylgruppenhaltigen Fettstoffen mit Ringöffnungsprodukten von expoxidierten Fettstoffen mit den olefinisch ungesättigten Carbonsäuren aus der Gruppe Acrylsäure, Methacrylsäure, Crotonsäure, Itakonsäure, Maleinsäure, Fumarsäure oder deren Mischungen können zusätzlich weitere Comonomere enthalten. Diese zusätzlichen Comonomere können Ester von C₁ bis C₃₀-Alkoholen, vorzugsweise von C₁₀ bis C₂₂-Alkoholen von olefinisch ungesättigten Carbonsäuren im Überschuß sein, es können aber auch deren, sowie Allylester oder Vinylester wie Vinylacetat, Vinylpropyonat, Vinyllaurat oder Vinylversatat oder auch Styrol, Divinylbenzol oder deren Mischungen sein.

Das erfindungsgemäß einzusetzende Matrixmaterial kann dabei einkomponentig formuliert werden. Hierzu eignen sich insbesondere die (Meth)acrylsäure-Derivate der Fettstoffe, durch Zusatz von bekannten radikalischen Polymerisationsstartern können diese duroplastischen Systeme einkomponentig formuliert werden. Gegebenenfalls können synthetische olefinisch ungesättigte Comonomere zugesetzt werden.

Bei zweikomponentigen Systemen werden die beiden Reaktionspartner erst unmittelbar vor der Reaktion gemischt. Beispielsweise können carboxylgruppenhaltige bzw. Carbonsäureanhydridhaltige Triglyceride mit epoxidierten Fetten und Ölen zur Reaktion gebracht werden, gegebenenfalls können in wechselnden Mengen synthetische Epoxide zugesetzt werden.

In ähnlicher Weise lassen sich die carbonsäuregruppenhaltigen bzw. carbonsäureanhydridgruppenhaltigen Triclyceride mit Fettaminen aushärten.

Die carbonsäuregruppenhaltigen bzw. carbonsäureanhydridgruppenhaltigen Triglyceride können auch mit hydroxidfunktionellen Fettstoffen im Wege einer Veresterung umgesetzt werden, hierzu kann der Zusatz von an sich bekannten Veresterungskatalysatoren notwendig sein.

Epoxidierte Triglyceride, gegebenenfalls unter Zusatz von synthetischen Expoxiden können auch mit Fettamiden, gegebenenfalls unter Zusatz von niedermolekularen synthetischen Polyaminen ausgehärtet werden.

Eine weitere Möglichkeit, das Matrixmaterial der erfindungsgemäßen oleochemischen Duroplasten zu modifizieren, besteht in der Herstellung von Polymerblends mit thermoplastischen Polymeren wie z. B. Polyethylen, Polypropylen sowie deren Copolymerisate, Polystyrol sowie Styrolcopolymere oder auch thermoplastische Materialien natürlichen Ursprungs wie z. B. thermoplastische Stärke, Polyester von Hydroxycarbonsäuren (Biopol), Celluloseacetat.

Weiterhin können den Verbundwerkstoffen an sich bekannte weitere Hilfsstoffe zugesetzt werden, hierzu gehören Flammschutzmittel, Farbpigmente, UV-Absorber sowie organische und/oder anorganische Füllstoffe. Als anorganische Füllstoffe eignen sich natürliche und synthetische Kieselsäuren (Aerosiltypen auch hydrophobiert , Amosiltypen, Zeolithe wie Sasil und Flavith D (Geruchsabsorber der Fa. Degussa), silikatische Mikrohohlkugeln (Fillite der Fa. Omya) und natürliche Silikate wie Betonite, Montmorillonite, Talk, Kaolinit und Wollastonit. Geeignete Farbpigmente sind beispielsweise Calciumcarbonat, Calciumsulfat, Bariumsulfat, Titandioxid und Ruß. Verschiedene Rußtypen (Furnaceruße, Gasruße z. B. Printex 60 Fa. Degussa) färben schon in geringen Konzentrationen das Bauteil schwarz ein und schützen es gegen UV-Strahlen. Die Einsatzkonzentration der Hilfsstoffe liegt bei 0,1 bis 5 Gew.-%.
Organische Füllstoffe sind beispielsweise Stärke und Stärkederivate, Weizenproteine, Cellulosepulver und Chitin-Chitosanpulver.

Obwohl die vorgenannten oleochemischen Duroplasten auch mit synthetischen Fasern wie Glasfasern, Kohlenstoffasern, Metallfasern und dgl. zu Faserverbundwerkstoffen verarbeitet werden können, werden erfindungsgemäß vorzugsweise Naturfasern eingesetzt. Dabei können diese Naturfasern in Form von Kurzfasern, Garnen, Rovings oder vorzugsweise textile Flächengebilde in Form von Vliesen, Nadelvlies, Wirrvliesen, Geweben, Gelegen oder Gewirken auf der Basis von Flachs-, Hanf-, Stroh-, Holzwolle-, Sisal-, Jute-, Kokos-, Ramie-, Bambus-, Bast-, Cellulose-, Baumwoll- oder Wollfasern, Tierhaaren oder Fasern auf Basis von Chitin/Chitosan oder deren Kombination eingesetzt werden.

Die erfindungsgemäßen Faserverbundwerkstoffe können dabei nach allen bekannten Herstellungstechnologien zu Formkörpern verarbeitet werden. Allen diesen bekannten Herstellungstechnologien von Formkörpern ist gemeinsam, daß die Ausgangswerkstoffe Faser und Matrix zu einer Formmasse zusammengeführt werden, welche auf, in oder zwischen festen Formwerkzeugen zu einem Verbund aushärten. Dabei wird der Faser-Ausgangswerkstoff in eine ungehärtete Matrixmasse des Duroplasten eingebracht und durch einen Verdichtungsvorgang völlig mit diesem noch niedrigviskosen duroplastischen Harz benetzt und umhüllt. Die Art des einzubringenden Fasermaterials bestimmt daher maßgeblich das zu verwendende Herstellungsverfahren. So kann z. B. kein Verstärkungsmaterial in Form von Gewebe in einem Extrusionsverfahren eingesetzt werden. Kurzfasern eignen sich hingegen sehr gut für Extrusionsverfahren oder Spritzapplikationen von Matrix/Fasergemischen. Letzteres wird vorzugsweise bei einkomponentig formulierten Systemen angewandt. Auch die Matrixwahl wird durch das Herstellverfahren bestimmt, z. B. durch die Viskosität der duromeren Mischung vor der Aushärtung.

Die Wahl des geeigneten Matrixwerkstoffes wiederum richtet sich nach der Faserart, dem Faservorprodukt und nicht zuletzt nach der Abbindegeschwindigkeit und der Flächengröße. Die Durchtränkung der Faser und der Härtezyklus der Matrix bestimmen sowohl die Qualität des Verbundes als auch die Verbindung der Schichten untereinander, insbesondere die der interlaminaren Festigkeit.

Als erfindungsgemäß einsetzbare Herstelltechnologien seien beispielhaft genannt das Pultrusionsverfahren, Fertigung nach der Wickeltechnik, Preßtechnik, Vakuumtechnik, differential pressure-resin transfer moulding (DP-RTM), resin transfer moulding (RTM), prepreg-Technik.

Nachfolgend wird die Erfindung anhand einiger Beispiele näher erläutert. Wenn nicht anders angegeben, sind bei den Zusammensetzungen alle Mengenangaben Gew.-%.

### Ausführungsbeispiele

### Beispiel 1: Herstellung des Ringöffnungsproduktes

In einem 500 ml Vierhalskolben mit Rückflußkühler werden 260 g Edenol D81 (epoxidiertes Sojaöl, Henkel, Epoxidgehalt: 6,63 %), 155,3 g Acrylsäure und 1,66 g 2,5 Di-tert-Butylhydrochinon eingewogen und unter Rühren und Durchleiten von 15 l/h Luft auf 120 °C erwärmt. Die Reaktion springt exotherm an, was sich durch einen Temperaturanstieg bis 140 °C bemerkbar macht. Man läßt insgesamt 6 h reagieren, gezählt ab dem Erreichen von 120 °C. Anschließend destilliert man unter Durchleiten von 15 l/h Luft bei 120 °C und 100 mbar die überschüssige Acrylsäure ab (ca. 2h).

Man erhält ein gelbes, viskoses Produkt, mit einem Epoxy-Gehalt < 0,2 %, einer Säurezahl < 50 und einer Viskosität von ca. 45000 mPas bei 20 °C.

Der Polymerisationsinhibitor 2,5 Di-tert-Butylhydrochinon kann z. B. gegen α-Tocopherol ausgetauscht werden.

### Beispiel 2: Mischung des Reaktiv-Harzes (Monomermischung)

97 % Addukt epoxidiertes Sojaöl/Acrysäure gemäß Beispiel 1 (enthält 4,1 % freie Acrylsäure)
+ 3 % freie Acrylsäure
+ 2 % tert-Butylper-(3,3,5 trimethylhexanoat)

Diese Mischung wird für 10 bis max. 30 min bei 200 °C in den Trockenschrank gestellt und ausgehärtet. Das Polymer zeigt keine Adhäsion an Teflonplatten, an Sitkablechen haftet es geringfügig. Zur Verhinderung eventuell auftretender Haftung an anderen Oberflächen lassen sich handelsübliche Trennmittel einsetzen.

Je nach gewünschter Verarbeitungstemperatur kann das Peroxid gegen ein schneller zerfallendes ausgetauscht werden. Die mechanischen Eigenschaften ändern sich dadurch nicht.

Das Harz läßt sich in bestehenden Verarbeitungsmaschinen (Pressen, Extrudern, Tränkwalzen) problemlos verarbeiten.

### Beispiel 3: Verbundwerkstoffe

Zur weiteren Verbesserung der mechanischen Eigenschaften werden Fasern in das Harz mit eingeschlossen und zusammen ausgehärtet. Dabei liegen die Fasern als Wirrvlies mit einer Masse von 200 bis 2000 g/m² vor.

Folgende mechanische Eigenschaften werden mit dem Harz des Beispiels 2 und 37 % Flachsfaseranteil erreicht:

| | | |
|---|---|---|
| Zugfestigkeit | σ_{z}, Br | 43 N/mm² |
| E-Modul | E_{z} | 7207 N/mm² |
| Dehnung | ε_{z, Br} | 0,9 % |

### Beispiele 4 bis 12

Analog zu Beispiel 2 wurden Mischungen von Reaktiv-Harzen (Monomermischungen) aus dem Ringöffnungsprodukt gemäß Beispiel 1, Comonomeren und 2 % tert-Butylper-(3,3,5-Trimethylhexanoat) hergestellt. Aus diesen wurden Prüfkörper für Zugfestigkeitsversuche gemäß DIN 53455 hergestellt.

Wie aus den Zugfestigkeits-, Reißfestigkeits- und Dehnungswerten ersichtlich ist, haben diese ausgehärteten Reaktiv-Harze hervorragende mechanische Eigenschaften. Auch die Herstellung von Verbundmaterialien analog zu Beispiel 6 bzw. 7 führte zu Verbundwerkstoffen mit ausgezeichneten Festigkeitseigenschaften.

### Beispiel 13

Analog zu Beispiel 1 wurde ein acrylatmodifiziertes, epoxidiertes Leinöl (Photomer 3082, Firma Henkel) mit 2 % tert-Butylper-(3,3,5 Trimethylhexanoat) versetzt und zu Prüfkörpern für einen Zugfestigkeitsversuch nach DIN 53455 ausgehärtet. Dabei wurden folgende Festigkeitswerte gemessen:

| | |
|---|---|
| Zugfestigkeit | 4,843 MPa |
| Dehnung b. Max | 2,8 % |
| Reißfestigkeit | 4,58 MPa |
| Reißdehnung | 2,64 %. |

### Beispiel 14

66 kg Lein-Standöl und 23,1 kg Maleinsäureanhydrid (MSA) wurden unter Rühren und Stickstoffüberleitung auf 200 °C aufgeheizt und 7 Stunden bei dieser Temperatur gehalten. Während der gesamten Reaktionszeit wurde Stickstoff übergeleitet. Es enstand ein rotbraunes, klares, viskoses Maleinsäureanhydrid-Addukt.

In einem Härtungsversuch wurden 558 g dieses Maleinsäureanhydrid-Adduktes mit 27,9 g Polyethylenglykol 300 gemischt und 16 Stunden bei 80 °C in einem Aluschälchen ausgehärtet. Es entstand ein gut ausgehärteter Film.

### Beispiel 15

Analog zu Beispiel 18 wurde ein MSA-Addukt aus 66 kg Sojaöl und 23,1 kg MSA hergestellt. 559 g dieses MSA-Adduktes wurden mit 121,1 g Dibenzoylperoxid versetzt und 12 Stunden auf 100 °C erhitzt. Es entstand ein brauner fester, leicht spröder Film.

### Beispiel 16

### Umsetzung von Fettmaleinaten mit Fettepoxiden

35,5g des Leinöl/MSA-Adduktes gemäß Beispiel 18 wurden mit 14,6 g expoxidiertem Leinöl und 0,2 g N-Methylimidazol versetzt und gemischt. In eimem Aluminiumschälchen wurde bei 80 °C 3,5 Stunden erwärmt. Es entstand ein hellbrauner, harter, leicht spröder Formkörper.

### Beispiel 17

Analog zu Beispiel 20 wurde ein Leinöl/MSA-Addukt im Gewichtsverhältnis 10:5,5 hergestellt. 29,5 g von diesem MSA-Addukt wurden mit 14,6 g epoxidierten Leinöl versetzt und 5 Stunden bei 80 °C ausgehärtet. Es entstand ein orangefarbener, sehr harter, wenig spröder Formkörper.

### Beispiel 18

Ein Sojaölfettsäure/MSA-Addukt (Gewichtsverhältnis 10:3,5) wurde hergestellt. 30g dieses Adduktes wurden mit 13,9 g epoxidiertem Leinöl und 0,2 g N-Methylimidazol versetzt und 1 Stunde bei 150 °C ausgehärtet. Es entstand ein gelber, leicht trüber, flexibler und elastischer Formkörper.

### Beispiel 19

### Umsetzung von Fettmaleinaten mit Bisphenol-A-Diglycidylether (Beispiel für Kombination eines Fettstoffes mit einem synthetischen Epoxid)

30,0 g eines Leinölfettsäure/MSA-Adduktes (Gewichtsverhältnis 10:6,67) wurden mit 27,8 g Bisphenol-A-Diglycidylether und 0,2 g N-Methylimidazol versetzt und 1 Stunde auf 150 °C erhitzt. Es entstand ein dunkelbrauner, harter, klarer Formkörper.

### Beispiel 20

### Herstellung von Fettaminen:

763,6 g Epoxystearinsäuremethylester und 1731,8 g Dipropylentriamin wurden zusammen in einem Dreihalskolben aufgeheizt. Das entstehende Methanol wurde bis 200 °C über einen Wasserabscheider abdestilliert (100 ml). Es wurde 5 Stunden bei 200 °C nachgerührt, wobei eine gelbe, klare Flüssigkeit entstand. Im Hochvakuum wurde der Überschuß des Amins bis 200 °C im Sumpf bei 0,08 mbar abdestilliert. Es enstand eine gelb-orange, viskose, klare Substanz (Fettamin A).

In gleicher Weise wurden 841,4 g Ethylendiamin in einem Dreihalskolben vorgelegt und bei 100 bis 130 °C wurden innerhalb einer Stunde 855,1 g epoxidiertes Sojaöl zugetropft. Anschließend wurde 5 Stunden lang bei 125 bis 130 °C weiter reagiert und anschließend im Vakuum bei 150 °C das überschüssige Amin abdestilliert. Es entstand eine hellbraune, pastöse Substanz (Fettamin B).

10,0 g des Fettamins A wurden mit 17,1 g Leinöl/MSA-Addukt (10:11,1) gemischt und bei 150 °C in einem Aluminiumbecher ausgehärtet. Es entstand sofort ein fester Formkörper.

In gleicher Weise wurden 25,0 g Fettamin B mit einem Sojaöl/MSA-Addukt (10:3,5) in einem Aluminiumbecher gemischt. Es trat sofort Polymerisation ein und es entstand ein fester Formkörper.

### Beispiel 21

46,2 g eines Sojaöl/MSA-Adduktes (10:3,5) wurden mit 3,4 g Diethylentriamin in einem Aluminiumbecher vermischt. Es trat sofort Polymerisation ein und es entstand ein gelb gefärbter Formkörper.

### Beispiel 22

244,3 g epoxidiertes Sojaöl wurden mit 287,7 g Dimerfettsäure und 0,2 g Trifluormethansulfonsäure gemischt und 1 Stunde bei 85 °C erwärmt. Es entstand ein fester, flexibler Formkörper.

Die Beispiel 14 bis 22 zeigen, daß eine Vielzahl von oleochemischen Reaktionsprodukten als ein- oder zweikomponentige duroplastische Matrixpolymere geeignet sind, die sich in hervorragender Weise mit entsprechenden Naturfasermaterialien zu Verbundwerkstoffen verarbeiten lassen.

## Patentansprüche

1. Faserverbundwerkstoff auf der Basis von Naturfasern und einem Matrixmaterial, wobei das Matrixmaterial im wesentlichen aus oleochemischen Duroplasten besteht und diese
a) aus Ringöffnungsprodukten epoxidierter Fettstoffe mit kurzkettigen olefinisch ungesättigten Carbonsäuren und ggf. weiteren olefinisch ungesättigten Comonomeren aufgebaut sind mit der Maßgabe, daß die ungesättigten Carbonsäuren ausgewählt sind aus der Gruppe Acrylsäure, Methacrylsäure, Crotonsäure, Itakonsäure, Maleinsäure, Fumarsäure oder deren Mischungen oder diese
b) aus anhydridisch modifizierten Fettsäuren aufgebaut sind, wobei diese durch En-Reaktionen oder Diels-Alder-Reaktionen von ungesättigten Anhydriden an isolierten und/ oder konjugierten Doppelbindungen der Ausgangsfettsäuren hergestellt werden.

2. Verbundwerkstoff nach Anspruch 1, **dadurch gekennzeichnet, daß** die weiteren Comonomere aus der Gruppe gebildet aus Estern von C₁- bis C₃₀-Alkoholen, vorzugsweise von C₁₀- bis C₂₂-Alkoholen, mit ungesättigten Carbonsäuren aus der Gruppe Acrylsäure, Methacrylsäure, Crotonsäure, Itakonsäure, Maleinsäure, Fumarsäure oder deren Mischungen sowie Allylestern, oder Vinytestem, wie Vinylacetat, Vinylproprionat oder Vinylversatat, Vinyllaurat oder Styrol, Divinylbenzol oder deren Mischungen ausgewählt werden.

3. Verbundwerkstoffe nach den Ansprüchen 1 oder 2, **dadurch gekennzeichnet, daß** die Carbonsäureanhydride aus der Gruppe Maleinsäureanhydrid, Bersteinsäureanhydrid, Citraconsäureanhydrid, Itakonsäureanhydrid, Phtalsäuernanhydrid, Trimellitsäureanhydrid, 4-Cyclohexan-1,2-dicarbonsäurenanhydrid und Naphtalin-1,8-dicarbonsäureanhydrid, Nadinsäureanhydrid oder deren Mischungen ausgewählt werden.

4. Verbundwerkstoffe nach den Ansprüchen 1 bis 3, **dadurch gekennzeichnet, dass** als Naturfasem, Kurzfasem, textile Flächengebilde in Form von Vliesen, Nadelvlies, Wirrvliesen, Geweben oder Gewirken auf der Basis von Flachs-, Hanf-, Stroh-, Holzwolle-, Sisal-, Jute-, Kokos-, Ramie-, Bambus-, Bast-, Cellulose-, Baumwoll- oder Wollfasem, Tierhaaren oder Fasern auf Basis von Chitin/Chitosan oder deren Kombination verwendet werden.

5. Verwendung der Verbundwerkstoffe nach den Ansprüchen 1 bis 4 zur Herstellung von Bauteilen für den Fahrzeugbau, den Flugzeugbau, die Bauindustrie, den Fensterbau, die Möbelindustrie, die Elektroindustrie, Sportgeräte, Spielzeuge, den Maschinen- und Apparatebau, die Verpackungsindustrie, die Landwirtschaft oder die Sicherheitstechnik.

## Claims

1. A fiber composite based on natural fibers and a matrix material, **characterized in that** the matrix material consists essentially of oleochemical thermosets produced from
a) ring opening products of epoxidized fats with short-chain olefinically unsaturated carboxylic acids and optionally other olefinically unsaturated comonomers, with the proviso that the unsaturated carboxylic acids are selected from the group consisting of acrylic acid, methacrylic acid, crotonic acid, itaconic acid, maleic acid, fumaric acid or mixtures thereof,
anhydride-modified fatty acids which are produced by ene addition or Diels-Alder addition of unsaturated anhydrides onto isolated and/or conjugated double bonds of the starting fatty acids.

2. A composite material as claimed in claim 1, **characterized in that** the other comonomers are selected from the group consisting esters of C₁₋₃₀ alcohols, preferably C₁₀₋₂₂ alcohols with unsaturated carboxylic acids from the group of acrylic acid, methacrylic acid, crotonic acid, itaconic acid, maleic acid, fumaric acid or mixtures thereof and allyl esters or vinyl esters, such as vinyl acetate, vinyl propionate or vinyl versatate, vinyl laurate or styrene, divinyl benzene or mixtures thereof.

3. Composite materials as claimed in claim 1 or 2, **characterized in that** the carboxylic anhydrides are selected from the group consisting of maleic anhydride, succinic anhydride, citraconic anhydride, itaconic anhydride, phthalic anhydride, trimellitic anhydride, 4-cyclohexane-1,2-dicarboxylic anhydride and naphthalene-1,8-dicarboxylic anhydride, nadic anhydride and mixtures thereof.

4. Composite materials as claimed in claims 1 to 3, **characterized in that** the natural fibers are selected from short fibers, sheet-form textiles in the form of nonwovens, needle-punched nonwovens, random laid nonwovens, woven fabrics, laid fabrics or knitted fabrics based on flax, hemp, straw, wood wool, sisal, jute, coconut, ramie, bamboo, bast, cellulose, cotton or wool fibers, animal hair or fibers based on chitin/chitosan and combinations thereof.

5. The use of the composite materials claimed in claims 1 to 4 for the production of structural components for vehicle and aircraft construction, the building industry, window manufacture, the furniture industry, the electronics industry, sports equipment, toys, machine construction, the packaging industry, agriculture or the safety sector.

## Revendications

1. Matériau composite en fibres à base de fibres naturelles et d'un matériau de matrice, dans lequel le matériau de matrice consiste essentiellement en duroplastes oleochimiques, ceux-ci étant constitués :
a) de matières grasses époxydées de produits d'ouverture du cycle avec des acides carboxyliques non saturés oléfiniquement à courte chaîne et éventuellement d'autres comonomères non saturés oléfiniquement, avec la restriction que les acides carboxyliques non saturés sont choisis dans le groupe des acides acrylique, acides métracrylique, crotonique, itaconique, maleïque, de l'acide fumarique ou de leurs mélanges, ou
b) d'acides gras modifiés par des anhydrides, et préparés par des réactions du type En- ou Diels-Alder d'anhydrides non saturés sur des doubles liaisons isolées et/ou conjugués des acides gras de départ.

2. Matériau composite selon la revendication 1,
**caractérisés en ce que**
les autres comonomères sont choisis dans le groupe formé d'esters d'alcools en C₁ à C₃₀, de préférence d'alcools en C₁₀ à C₂₂, avec des acides carboxyliques non saturés, choisis dans le groupe de l'acide acrylique, de l'acide méthacrylique, de l'acide crotonique, de l'acide itaconique, de l'acide maléïque, de l'acide fumarique, ou de leurs mélanges ainsi que des esters d'allyle ou des esters de vinyle comme l'acétate de vinyle, le propionate de vinyle ou le versatate de vinyle, le laurate de vinyle ou bien le styrène, le divinylbenzène ou leurs mélanges.

3. Matériaux composites selon la revendication 1 ou la revendication 2,
**caractérisés en ce que**
les anhydrides d'acide carboxylique sont choisis dans le groupe de l'anhydride maléïque, de l'anhydride d'acide succinique, d'anhydride d'acide citraconique, d'anhydride d'acide itaconique, d'anhydride phtalique, d'anhydride trimellitique, d'anhydride d'acide 4-cyclohexane-1,2-dicarboxylique et d'anhydride d'acide naphtalène-1,8-dicarboxylique, d'anhydride d'acide naphtène dicarboxylique ou leurs mélanges.

4. Matériaux composites selon les revendications 1 à 3,
**caractérisés en ce que**
comme fibres naturelles, on utilise des fibres courtes, produits de surface en textile sous forme de non-tissés, de tissu aiguilleté, fibres embrouillées, ou tissus à mailles, à base de fibres de lin, de chanvre, de paille, en laine de bois, de sisal, de chanvre, de coco, de racine, de bambou, de filasse, de cellulose, de coton ou de laine ou de fibres animales ou des fibres à base de chitine/chitosan ou leurs combinaisons.

5. Utilisation des matériaux composites selon les revendications 1 à 4, pour la production d'éléments de construction pour l'industrie automobile, pour la construction aéronautique, pour la construction de fenêtres, pour l'industrie du meuble, pour l'industrie électrique, pour les appareils de sport, pour la construction de machines et d'appareils, l'industrie de l'emballage, l'agriculture ou la technique de sécurité.
